# EUROPÄISCHE PATENTSCHRIFT

(11) **EP 2 576 290 B1**
(45) Veröffentlichungstag und Bekanntmachung des Hinweises auf die Patenterteilung: **25.04.2018**
(21) Anmeldenummer: 11720482.6
(22) Anmeldetag: 19.05.2011
(51) Int. Cl.: B60Q 1/14

(54) **STEUERGERÄT UND VERFAHREN ZUM ENTBLENDEN VON FAHRZEUGEN BEI ABBIEGEVORGÄNGEN**
CONTROL UNIT AND METHOD FOR PREVENTING DAZZLING OF VEHICLES DURING TURNING MANOEUVRES
APPAREIL DE COMMANDE ET PROCÉDÉ POUR NE PAS ÉBLOUIR DES VÉHICULES LORS DE MAN UVRES DE VIRAGE

(30) Priorität: 22.05.2010 DE 102010021320
(43) Veröffentlichungstag der Anmeldung: 10.04.2013
(73) Patentinhaber: HELLA GmbH & Co. KGaA, 59552 Lippstadt (DE)
(72) Erfinder: WILKS, Carsten, 59555 Lippstadt (DE); HÜSTER, Christian, 33154 Salzkotten (DE); IRMSCHER, Tobias, 59555 LIppstadt (DE); SCHMIDT, Christian, 33106 Paderborn (DE)
(86) Internationale Anmeldenummer: PCT/EP2011/058097
(87) Internationale Veröffentlichungsnummer: WO 2012/000717

(56) Entgegenhaltungen:
- EP-A2- 0 881 613
- DE-A1- 10 360 263
- DE-A1- 19 631 151
- DE-A1-102007 000 242
- DE-A1-102009 034 224
- DE-B4- 19 758 665
- FR-A1- 2 841 208

## Beschreibung

Die Erfindung betrifft ein Steuergerät für ein erstes Kraftfahrzeug und zum Entblenden von vorrausfahrenden und/oder entgegenkommenden Fahrzeugen bei Abbiegevorgängen
- mit einer ersten Schnittstelle zur Verbindung mit einer Erkennungsvorrichtung, insbesondere einem Kamerasystem, zum Erkennen von vorausfahrenden und/oder entgegenkommenden Fahrzeugen,
- mit einer zweiten Schnittstelle zur Verbindung mit Kraftfahrzeugscheinwerfern,
- wobei das Steuergerät zum Steuern und/oder Regeln geeignet und eingerichtet ist, verschiedene Lichtverteilungen der Kraftfahrzeugscheinwerfer auszuwählen
- das Steuergerät geeignet und eingerichtet ist, ein an der zweiten Schnittstelle anliegendes Stellsignal zum Einstellen der ausgewählten Lichtverteilung zu erzeugen,
- wobei durch das Steuergerät die Lichtverteilung der Kraftfahrzeugscheinwerfer so wählbar ist, dass eine das entgegenkommende oder vorausfahrende Fahrzeug entblendende Lichtverteilung an den Kraftfahrzeugscheinwerfern einstellbar ist, wenn an der ersten Schnittstelle ein wenigstens ein vorausfahrendes oder entgegenkommendes Fahrzeug anzeigendes Signals anliegt.

Die Erfindung betrifft ferner ein Verfahren zum Entblenden von Fahrzeugen bei Abbiegevorgängen zur Durchführung mit einer Anordnung eines ersten Kraftfahrzeugs umfassend eine Erkennungsvorrichtung, ein Steuergerät und Kraftfahrzeugscheinwerfer, wobei das Steuergerät eine ein vorrausfahrendes und/oder entgegenkommendes Fahrzeug entblendende Lichtverteilung auswählt und der Lichtverteilung entsprechende Stellsignale erzeugt, mit denen die Kraftfahrzeugscheinwerfer angesteuert werden, sobald ein vorausfahrendes und/oder entgegenkommendes Fahrzeug erkannt wird.

Derartige Steuergeräte und Verfahren sind aus dem Stand der Technik in vielfältiger Art und Weise bekannt geworden. Durch diese Verfahren ist es möglich, die Blendung von Fahrzeugführern von entgegenkommenden Fahrzeugen und vorrausfahrenden Fahrzeugen rechtzeitig zu entblenden und in Verkehrsituationen, in denen keine Gefahr der Blendung besteht, durch ein zügiges Einstellen einer Fernlichtverteilung für eine größere Verkehrssicherheit zu sorgen. Die bekannten Steuergeräte und Verfahren führen im Vergleich zu einem durchschnittlichen Fahrzeugführer das Entblenden und das Aufblenden zuverlässiger durch. Dennoch treten gelegentlich Verkehrssituationen ein, in denen nach wie vor ein manueller Eingriff durch den Fahrzeugführer notwendig ist.

Eine solche Verkehrsituation kann eintreten, wenn das erste Fahrzeug abbiegt und das entgegenkommende Fahrzeug und/oder das vorrausfahrende Fahrzeug aus dem einen Erfassungsbereich des Erkennungsmittels gerät und das Steuergerät daher eine Fernlichtverteilung auswählt, die an den Kraftfahrzeugscheinwerfern eingestellt werden, obwohl während des Abbiegens oder kurz nach dem Abbiegen ein zu entblendendes Fahrzeug in den Lichtkegel des ersten Fahrzeugs gerät. Aufgrund von systemimmanenten Verzögerungen kann dieses neu zu entblendende Fahrzeug nicht rechtzeitig automatisch entblendet werden. Ein manueller Eingriff ist notwendig.

Eine solche Verkehrssituation kann ferner eintreten, wenn ein dem ersten Kraftfahrzeug vorrausfahrendes Fahrzeug abbiegt und dadurch nicht mehr erfasst werden kann, obwohl es noch im Erfassungsbereich des Erkennungsmittels ist oder weil es den Erfassungsbereich bereits verlassen hat, aber noch im Lichtkegel des dann eingeschalteten Fernlichts liegt.

Ein Kraftfahrzeug kann im Erfassungsbereich des Erkennungsmittels liegen und dennoch nicht als zu entblendendes Objekt erkannt werden, wenn zum Beispiel die üblicherweise für die Erfassung des Objekts notwendige Erkennung von Rücklichtern oder Frontlichtern aufgrund einer seitlichen Stellung des Fahrzeugs nicht möglich ist.

Hier setzt die Erfindung an.

Der Erfindung liegt die Aufgabe zugrunde ein Steuergerät und ein Verfahren der eingangs genannten Art so zu verbessern, dass weniger manuelle Eingriffe des Fahrzeugführers des ersten Kraftfahrzeugs notwendig sind.

Diese Aufgabe wird durch ein erfindungsgemäßes Steuergerät nach Anspruch 1 und ein erfindungsgemäßes Verfahren nach Anspruch 3 gelöst.

Das erfindungsgemäße Steuergerät weist eine dritte Schnittstelle auf, die zum Anzeigen des Beginns der Erkennung eines Abbiegevorgangs des unmittelbar vorrausfahrenden Fahrzeugs geeignet und eingerichtet ist, wobei durch das Steuergerät die entblendende Lichtverteilung der Kraftfahrzeugscheinwerfer bei Anliegen eines den Beginn des Abbiegevorgangs anzeigenden Signals für eine vorbestimmte Wegstrecke oder eine vorbestimmte Zeit eingestellt bleibt.

Ferner kann das Steuergerät eine vierte Schnittstelle aufweisen, die zum Anzeigen der Geschwindigkeit geeignet und eingerichtet ist. Dann kann das Steuergerät geeignet und eingerichtet sein, aus der angezeigten Geschwindigkeit die seit dem Beginn des Abbiegevorgangs zurück gelegte Wegstrecke zu ermitteln. Die erste, zweite, dritte und/oder die vierte Schnittstelle können mit einer oder mehreren anderen Schnittstellen zu einer Schnittstelle zusammengefasst sein.

Das erfindungsgemäße Verfahren unterscheidet sich von dem eingangs beschriebenen, herkömmlichen Verfahren dadurch, dass die vom Steuergerät ausgewählte und an den Kraftfahrzeugscheinwerfern eingestellte entblendende Lichtverteilung für wenigstens einen vorbestimmten Zeitraum oder eine vorbestimmte Wegstrecke eingestellt bleibt, sobald die Erkennung eines Abbiegevorgangs des vorausfahrenden Fahrzeugs beginnt.

Nach Ablauf des vorbestimmten Zeitraums oder nach Durchfahren der vorbestimmten Wegstrecke behält das Steuergerät vorteilhaft die entblendende Lichtverteilung bei, sofern ein entgegenkommendes und/oder vorrausfahrendes Fahrzeug erkannt wird.

Sofern allerdings kein entgegenkommendes und/oder vorrausfahrendes Fahrzeug erkannt wird, kann nach Ablauf des vorbestimmten Zeitraums oder nach Durchfahren der vorbestimmten Wegstrecke das Steuergerät die bislang ausgewählte, entblendende Lichtverteilung verwerfen.

Anhand der beigefügten Zeichnungen wird die Erfindung nachfolgend näher erläutert. Dabei zeigt:
- Fig. 1: eine Draufsicht einer Verkehrssituation, in welcher aufgrund eines vorrausfahrenden zweiten Kraftfahrzeugs an einem ersten Kraftfahrzeug eine entblendende Lichtverteilung eingestellt ist,
- Fig. 2: eine Draufsicht einer Verkehrssituation, in welcher es beim Stand der Technik zur Blendung eines vorrausfahrenden, abbiegenden zweiten Kraftfahrzeugs durch das erste Kraftfahrzeug kommt und

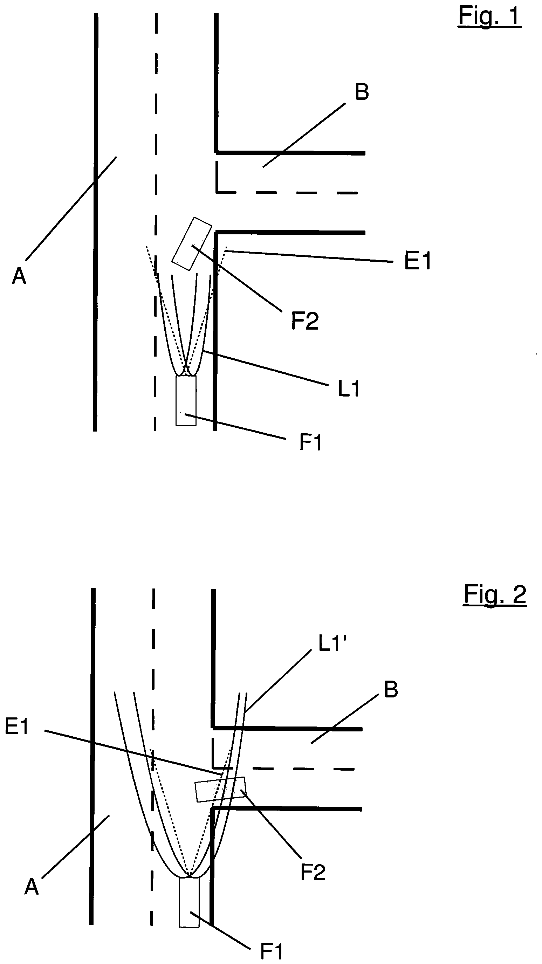

In den Figuren 1 und 2 ist mit A eine Straße bezeichnet, von welcher eine mit B bezeichnete Straße abzweigt. Auf den Straßen sind Kraftfahrzeuge F1, F2 unterwegs.

Das erste Kraftfahrzeug F1 weist ein Erkennungsmittel auf, mit welchem in einem Erfassungsbereich E1 befindliche Lichtquellen erkannt werden können. Die Lichtquellen werden klassifiziert und Objekten zugeordnet. Wird unter den Objekten ein zu entblendendes Objekt erkannt, wird durch ein Steuergerät des ersten Kraftfahrzeugs von einer Fernlichtverteilung L1' in eine entblendende Lichtverteilung L1 gewechselt. Ist ein zu entblendendes Objekt dann später nicht mehr im Erfassungsbereich E1 erkennbar, wechselt das Steuergerät zurück in die Fernlichtverteilung L1'.

In der in Figur 1 dargestellten Fahrsituation folgt das erste Kraftfahrzeug F1 einem zweiten Kraftfahrzeug F2 auf der ersten Straße. Das zweite Kraftfahrzeug F2 befindet sich im Erfassungsbereich des Erkennungsmittels des ersten Kraftfahrzeugs F1. Das Steuergerät des ersten Kraftfahrzeugs hat daher die entblendende Lichtverteilung L1 gewählt.

Das zweite Kraftfahrzeug F2 ist dabei in die abzweigende zweite Straße B abzubiegen. Es gerät dadurch aus dem Erfassungsbereich E1 des Erkennungsmittels des ersten Kraftfahrzeuges F1. Das Steuergerät des ersten Kraftfahrzeugs wählt dann eine Fernlichtverteilung L1' (Fig. 2) aus. Das Fernlicht strahlt allerdings seitlich über den Erfassungsbereich E1 hinaus und beleuchtet auch das zweite Kraftfahrzeug F2, wodurch es zu einer Blendung des Fahrzeugführers des zweiten Fahrzeugs kommen kann.

In dieser Fahrsituation wird nun durch das erfindungsgemäße Steuergerät bzw. das erfindungsgemäße Verfahren Abhilfe geschaffen. Dem erfindungsgemäßen Steuergerät wird angezeigt, dass ein Abbiegevorgang des zweiten Kraftfahrzeugs F2 erkannt worden ist. Ab dem Beginn der Erkennung wird für einen vorgegebenen Zeitraum oder eine vorgegebene Wegstrecke, die das erste Kraftfahrzeug zurückzulegen hat, die entblendende Lichtverteilung L1 aus Figur 1 beibehalten. Die Gefahr der Blendung des Fahrzeugführers des zweiten Kraftfahrzeugs wird dadurch vermieden.

### Bezugszeichenliste

- A: erste Straße
- B: zweite Straße
- F1: erstes Kraftfahrzeug
- F2: zweites Kraftfahrzeug

- E1: Erfassungsbereich des Erkennungsmittels des ersten Kraftfahrzeugs
- L1: entblendende Lichtverteilung
- L1': Fernlichtverteilung

## Patentansprüche

1. Steuergerät für ein erstes Kraftfahrzeug (F1) und zum Entblenden von anderen Fahrzeugen bei Abbiegevorgängen
- mit einer ersten Schnittstelle zur Verbindung mit einer Erkennungsvorrichtung, insbesondere einem Kamerasystem, zum Erkennen von vorausfahrenden (F2) und/oder entgegenkommenden Fahrzeugen,
- mit einer zweiten Schnittstelle zur Verbindung mit Kraftfahrzeugscheinwerfern,
- wobei das Steuergerät zum Steuern und/oder Regeln geeignet und eingerichtet ist, verschiedene Lichtverteilungen der Kraftfahrzeugscheinwerfer auszuwählen,
- das Steuergerät geeignet und eingerichtet ist, ein an der zweiten Schnittstelle anliegendes Stellsignal zum Einstellen der ausgewählten Lichtverteilung zu erzeugen und
- wobei durch das Steuergerät die Lichtverteilung der Kraftfahrzeugscheinwerfer so wählbar ist, dass eine das entgegenkommende oder vorausfahrende (F2) Fahrzeug entblendende Lichtverteilung an den Kraftfahrzeugscheinwerfern einstellbar ist, wenn an der ersten Schnittstelle ein wenigstens ein vorausfahrendes (F2) oder entgegenkommendes Fahrzeug anzeigendes Signals anliegt,
**dadurch gekennzeichnet, dass**
- das Steuergerät eine dritte Schnittstelle aufweist, die zum Anzeigen des Beginns der Erkennung eines Abbiegevorgangs des unmittelbar vorrausfahrenden Fahrzeugs (F2) geeignet und eingerichtet ist,
- durch das Steuergerät die entblendende Lichtverteilung der Kraftfahrzeugscheinwerfer bei Anliegen eines den Beginn des Abbiegevorgangs anzeigenden Signals für eine vorbestimmte Wegstrecke oder eine vorbestimmte Zeit eingestellt bleibt.

2. Steuergerät nach Anspruch 1, **dadurch gekennzeichnet, dass** das Steuergerät eine vierte Schnittstelle aufweist, die zum Anzeigen der Geschwindigkeit geeignet und eingerichtet ist, und dass das Steuergerät geeignet und eingerichtet ist aus der angezeigten Geschwindigkeit die seit dem Beginn des Abbiegevorgangs zurück gelegte Wegstrecke zu ermitteln.

3. Verfahren zum Entblenden von Fahrzeugen bei Abbiegevorgängen zur Durchführung mit einer Anordnung eines ersten Kraftfahrzeugs (F1) umfassend eine Erkennungsvorrichtung, ein Steuergerät, insbesondere nach Anspruch 1 oder 2, und mit Kraftfahrzeugscheinwerfern, wobei das Steuergerät eine ein vorrausfahrendes (F2) und/oder entgegenkommendes Fahrzeug
entblendende Lichtverteilung auswählt und der Lichtverteilung entsprechende Stellsignale erzeugt, mit denen die Kraftfahrzeugscheinwerfer angesteuert werden, sobald ein vorausfahrendes und/oder entgegenkommendes Fahrzeug erkannt wird,
**dadurch gekennzeichnet,**
**dass** die vom Steuergerät ausgewählte und an den Kraftfahrzeugscheinwerfern eingestellte entblendende Lichtverteilung für wenigstens einen vorbestimmten Zeitraum oder eine vorbestimmte Wegstrecke eingestellt bleibt, sobald die Erkennung eines Abbiegevorgangs des unmittelbar vorausfahrenden Fahrzeugs beginnt.

4. Verfahren nach Anspruch 3, **dadurch gekennzeichnet, dass** nach Ablauf des vorbestimmten Zeitraums oder nach Durchfahren der vorbestimmten Wegstrecke das Steuergerät die entblendende Lichtverteilung beibehält, sofern ein entgegenkommendes und/oder vorrausfahrendes Fahrzeug erkannt wird.

5. Verfahren nach Anspruch 3, **dadurch gekennzeichnet, dass** nach Ablauf des vorbestimmten Zeitraums oder nach Durchfahren der vorbestimmten Wegstrecke das Steuergerät die bislang ausgewählte, entblendende Lichtverteilung verwirft, sofern kein entgegenkommendes und/oder vorrausfahrendes Fahrzeug (F2) erkannt wird.

## Claims

1. Control device for a first motor vehicle (F1) and for the protection of other vehicles during turning
- having a first interface for the connection with a detection device, particularly a camera system, for the detection of vehicles driving ahead and / or oncoming vehicles (F2),
- having a second interface for the connection with motor vehicle headlamps,
- wherein the control device is equipped and suitable for the selection of various light distribution patterns of the motor vehicle headlamps,
- wherein the control device is equipped and suitable for the generation of a control signal present at the second interface for the setting of the selected light distribution pattern and
- wherein, by means of the control device, the light distribution pattern of the motor vehicle headlamp can be selected in a manner that a light distribution pattern of the motor vehicle headlamp can be set so that it does not dazzle the oncoming vehicle or the vehicle driving ahead (F2), if at the first interface at least one signal indicating an oncoming vehicle or a vehicle driving ahead (F2) is present,
**Characterized in that**
- the control device has a third interface equipped and suitable for the indication of the beginning of the detection of a turning process of the vehicle driving directly ahead (F2),
- by means of the control device, the light distribution pattern of the motor vehicle headlamps preventing dazzling remains set when a signal is present which indicates the beginning of the turning process for a predetermined path or a predetermined time.

2. Control device according to Claim 1, **characterized in that** the control device has a fourth interface equipped and suitable for speed indication and that the control device is equipped and suitable for the determination of the length of the path travelled since the beginning of the turning process from the indicated speed.

3. Procedure for the protection of vehicles against dazzling during turning for execution with an arrangement of a first motor vehicle (F1) comprising a detection device, a control device, in particular according to Claim 1 or 2, and with motor vehicle headlamps, wherein the control device selects a light distribution pattern protecting a vehicle driving ahead and/ or an oncoming vehicle (F2) against being dazzled and generates control signals according to the light distribution pattern, by means of which the motor vehicle headlamps are driven as soon as a vehicle driving ahead and/or oncoming vehicle is detected,
**Characterized in that**
The light distribution pattern protecting against dazzling selected by the control device and set on the motor vehicle headlamps remains set at least for a predetermined period or a predetermined distance as soon as the detection of a turning process of the vehicle driving directly ahead begins.

4. Procedure according to Claim 3, **characterized in that** after the lapse of the predetermined period or after driving the predetermined distance, the control device maintains the light distribution pattern protecting against dazzling if an oncoming vehicle and/ or a vehicle driving ahead is detected.

5. Procedure according to Claim 3, **characterized in that** after the lapse of the predetermined period or after driving the predetermined distance, the control device gives the light distribution protecting against dazzling up, which was selected so far, if no oncoming vehicle and / or no vehicle (F2) driving ahead is detected.

## Revendications

1. Boîtier électronique pour un premier véhicule automobile (F1) et pour l'anti-éblouissement d'autres véhicules lors des manoeuvres de virage,
- avec une première interface en vue d'une connexion à un dispositif de détection, surtout un système de caméra servant à détecter des véhicules qui précédent (F2) et/ou venant en sens inverse,
- avec une deuxième interface en vue d'une connexion aux projecteurs de véhicule automobile,
- le boîtier électronique étant approprié et configuré à commander et/ou régler la sélection de différentes répartitions lumineuses des projecteurs de véhicule automobile,
- le boîtier électronique étant approprié et configuré à générer un signal de commande appliqué à la deuxième interface pour régler la répartition lumineuse sélectionnée et
- la répartition lumineuse des projecteurs de véhicule automobile pouvant être sélectionnée par le boîtier électronique de telle manière qu'une répartition lumineuse n'éblouissant pas le véhicule venant en sens inverse ou qui précède (F2) puisse être réglée sur les projecteurs de véhicule automobile quand un signal indiquant au moins un véhicule qui précède (F2) ou venant en sens inverse est appliqué à la première interface,
**caractérisé en ce que**
- le boîtier électronique présente une troisième interface qui est appropriée et configurée à indiquer le début de la détection d'une manoeuvre de virage du véhicule qui précède directement (F2),
- la répartition lumineuse non éblouissante des projecteurs de véhicule automobile restant réglée par le boîtier électronique pour un trajet déterminé ou un temps déterminé lors de l'application d'un signal indiquant le début de la manoeuvre de virage.

2. Boîtier électronique selon la revendication 1,
**caractérisé en ce que** le boîtier électronique présente une quatrième interface, étant appropriée et configurée à indiquer la vitesse et que le boîtier électronique étant approprié et configuré à déterminer la distance parcourue dès le début de la manoeuvre de virage sur la base de la vitesse indiquée.

3. Procédé pour l'anti-éblouissement des véhicules lors des manoeuvres de virage pour la réalisation avec un agencement d'un premier véhicule automobile (F1) comprenant un dispositif de détection, un boîtier électronique, surtout selon la revendication 1 ou 2, et avec des projecteurs de véhicule automobile, le boîtier électronique choisissant une répartition lumineuse qui n'éblouit pas de véhicule qui précède (F2) et/ou venant en sens inverse et produisant des signaux de réglage correspondants à la répartition lumineuse avec lesquels les projecteurs de véhicule automobile sont commandés dès qu'un véhicule qui précède et/ou venant en sens inverse est reconnu,
**caractérisé en ce que**
la répartition lumineuse choisie par le boîtier électronique et réglée sur les projecteurs de véhicule automobile de manière non-éblouissante reste réglée pour au moins une période de temps prédéterminée ou un trajet déterminé, dès que la détection d'une manoeuvre de virage du véhicule qui précède directement commence.

4. Procédé selon la revendication 3,
**caractérisé en ce qu'**après l'expiration de la période de temps prédéterminée ou après le passage d'un trajet déterminé le boîtier électronique maintient la répartition lumineuse non-éblouissante pour autant qu'un véhicule qui précède et/ou venant en sens inverse soit reconnu.

5. Procédé selon la revendication 3,
**caractérisé en ce qu'**après l'expiration de la période de temps prédéterminée ou après le passage d'un trajet déterminé le boîtier électronique annule la répartition lumineuse non-éblouissante choisie jusqu'à présent pour autant qu'aucun véhicule qui précède (F2) et/ou venant en sens inverse ne soit reconnu.
